# EUROPEAN PATENT SPECIFICATION

(11) **EP 2 702 807 B1**
(45) Date of publication and mention of the grant of the patent: **14.06.2017**
(21) Application number: 11864307.1
(22) Date of filing: 22.12.2011
(51) Int. Cl.: H04B 7/04, H04J 11/00, H04L 5/00, H04L 27/26, H04W 4/00, H04W 52/02, H04B 7/06, H04W 36/14, H04W 88/06

(54) **MACHINE-TO-MACHINE COMMUNICATION DEVICE AND METHOD FOR PROVIDING ENHANCED ACCESS BARRING IN A WIRELESS NETWORK**
MASCHINE-MASCHINE-KOMMUNIKATIONSVORRICHTUNG UND VERFAHREN ZUR BEREITSTELLUNG VON VERBESSERTER ZUGRIFFSSPERRE IN EINEM DRAHTLOSEN NETZWERK
DISPOSITIF DE COMMUNICATION MACHINE-MACHINE ET PROCÉDÉ POUR ASSURER UNE INTERDICTION D'ACCÈS AMÉLIORÉE DANS UN RÉSEAU SANS FIL

(30) Priority: 29.04.2011 US 201161481024 P
(43) Date of publication of application: 05.03.2014
(60) Divisional application: 16181092.4
(73) Proprietor: Intel Corporation, Santa Clara, CA 95054 (US)
(72) Inventor: FONG, Mo-Han, Sunnyvale, CA 94087 (CA); YANG, Xiangying, Campbell, CA 98005 (US); JAIN, Puneet, Hillsboro, OR 97124 (US)
(74) Representative: HGF Limited
(86) International application number: PCT/US2011/066963
(87) International publication number: WO 2012/148484

(56) References cited:
- US-A1- 2010 057 485
- US-A1- 2011 058 480
- US-A1- 2011 086 642
- LG ELECTRONICS INC: "PWS-like Broadcast for MTC", 3GPP DRAFT; R2-104561 MTC BROADCAST_R0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 16 August 2010 (2010-08-16), XP050451731, [retrieved on 2010-08-16]
- TELEFON AB LM ERICSSON ET AL: "Realizing Extended Access Barring", 3GPP DRAFT; GP-101903, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. San Jose del Cabo, Mexico; 20101122, 18 November 2010 (2010-11-18), XP050469443, [retrieved on 2010-11-18]
- TELEFON AB LM ERICSSON ET AL: "Realizing Extended Access Barring", 3GPP DRAFT; GP-110277, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 24 February 2011 (2011-02-24), XP050486522, [retrieved on 2011-02-24]
- NOKIA CORPORATION ET AL: "Solutions for MTC overload control for LTE", 3GPP DRAFT; R2-104720 MTC OPTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451925, [retrieved on 2010-08-17]
- SHARP: "Latency and Overload Issues for MTC Devices", 3GPP DRAFT; R2-104348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451829, [retrieved on 2010-08-17]
- SIERRA WIRELESS: "Broadcasting of MTC Access Barring", 3GPP DRAFT; S2-103114_MTCACCESSBARRING_REV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20100706, 6 July 2010 (2010-07-06), XP050458309, [retrieved on 2010-07-06]
- VODAFONE: "Extended ACB for EUTRAN", 3GPP DRAFT; S2-105806_R2-106274, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jacksonville; 20101115, 16 November 2010 (2010-11-16), XP050523140, [retrieved on 2010-11-16]
- VODAFONE: "Extended ACB for UTRAN", 3GPP DRAFT; R2-106275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492202, [retrieved on 2010-11-09]

## Description

### TECHNICAL FIELD

Embodiments pertain to wireless communications. Some embodiments relate to enhanced access barring of wireless devices on a wireless network.

### BACKGROUND

Although electronic wireless communications have been available for many decades now, in a very short time in the not to distant past, every day interaction with devices having such capabilities has transformed from listening or watching the result of such technology at one's home to carrying highly functional devices nearly everywhere one goes. As wireless traffic has increased so too has the supporting technologies, especially in the realm of voice communications. However, the advances in wireless technologies in the area of general information communication has enabled the automatic exchange of information without the need for constant user interaction. In so doing, various industries have made available wireless devices that automatically access wireless networks, such as mobile or cellular networks, and automatically exchange information with other wireless devices. These machine-to-machine (M2M) wireless devices can be allowed access to the wireless networks under the same protocols as cell phones. However, the ease with which these M2M devices can be implemented and the various data collection functions they can serve has resulted in a proliferation of M2M devices, and correspondingly, an increase in the overall wireless traffic demands.
Reference is made to LG ELECTRONICS INC: "PWS-like Broadcast for MTC", 3GPP DRAFT; R2-104561 MTC BROADCAST_RO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain. Reference is also made to TELEFON AB LM ERICSSON ET AL: "Realizing Extended Access Barring", 3GPP DRAFT; GP-101903, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. San Jose del Cabo, Mexico and to SHARP: "Latency and Overload Issues for MTC Devices", 3GPP DRAFT; R2-104348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG2, no. Madrid, Spain.

### BRIEF DESCRIPTION OF THE DRAWINGS

FIG. 1 illustrates generally a wireless network system 100, such as a wireless mobile network, according to one embodiment of the present subject matter.
FIG. 2 illustrates generally an example user equipment (UE).
FIGS. 3 and 4 illustrate generally message flow diagrams between a base station and one or more UEs for providing enhanced access barring (EAB).

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

The present inventors have recognized, among other things, that the proliferation of human-to-human wireless devices as well as the proliferation of M2M devices has created an opportunity to more effectively handle overload conditions associated with accessing a wireless communication network such as , but not limited to, a mobile wireless network.

The following abbreviations may be used herein: Evolved Universal Terrestrial Radio Access Network (E-UTRAN), Long-Term Evolution (LTE), 3rd Generation Partnership Project (3GPP), Universal Mobile Telecommunications System (UMTS), Worldwide Interoperability for Microwave Access (WiMAX), Wireless Local Area Network (WLAN), Orthogonal Frequency Division Multiplexed (OFDM), Orthogonal Frequency Division Multiple Access (OFDMA), Code Division Multiple Access (CDMA), Multiple-Input Multiple Output (MIMO), Multi-User MIMO (MU-MIMO), Single-User MIMO (SU-MIMO), Radio-Access Technology (RAT), Radio-Access Network (RAN), Wireless Fidelity (WiFi), Institute of Electrical and Electronics Engineers (IEEE).

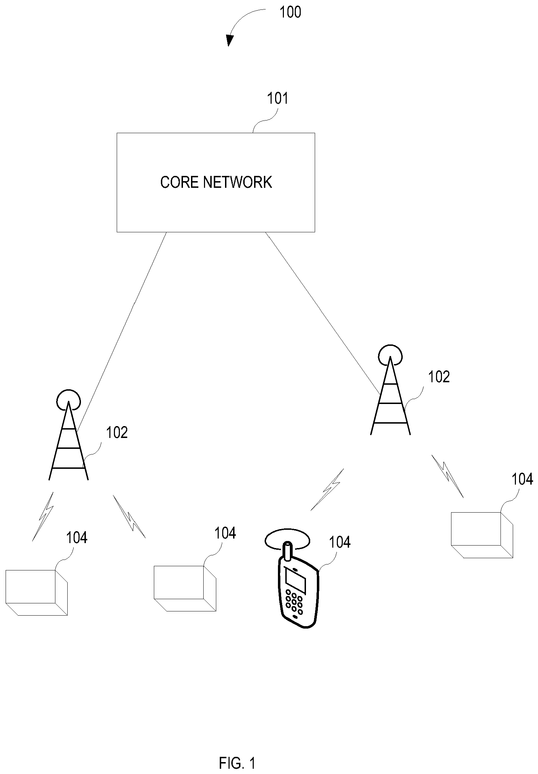

FIG. 1 illustrates generally a wireless network system 100, such as a wireless mobile network, according to one embodiment of the present subject matter. In various embodiments, the wireless network system 100 can include core network equipment 101, a base station 102 sometimes referred to as a Node B or an enhanced or evolved Node B (eNB), and a plurality of devices 104, sometimes referred to as user equipment (UE), capable of communicating with or over the wireless network system 100 In certain embodiments, a wireless network system 100 can include one or more communication paths between the base stations 102, such as eNBs, independent of the core network equipment 101. In some embodiments, the UEs can include UEs capable of communicating automatically with other UEs with little or no user intervention. Such UEs can be referred to a machine-to-machine (M2M) devices. A base station 102 and UE 104 can operate as part of an LTE-A network, such as a radio-access network (RAN) or a UMTS network. The base station 102 and UE 104 can communicate with each other using a plurality of channels. In various embodiments, the base station 102 and M2M capable UEs 104 can be configured to communicate orthogonal-frequency division multiplexed (OFDM) communication signals over a multicarrier communication channel. The OFDM signals can comprise a plurality of orthogonal subcarriers. In some broadband multicarrier embodiments, base station 102 can be part of a broadband wireless access (BWA) network communication station, such as a Worldwide Interoperability for Microwave Access (WiMAX) communication station. In some other broadband multicarrier embodiments, base station 102 may be a 3rd Generation Partnership Project (3GPP) Universal Terrestrial Radio Access Network (UTRAN) Long-Term-Evolution (LTE) or a Long-Term-Evolution (LTE) communication station, although the scope of the invention is not limited in this respect. In these broadband multicarrier embodiments, base station 102 and UEs, such as M2M devices, can be configured to communicate in accordance with an orthogonal frequency division multiple access (OFDMA) technique.

For more information with respect to the IEEE 802.16 standards, please refer to "IEEE Standards for Information TechnologyTelecommunications and Information Exchange between Systems" - Metropolitan Area Networks - Specific Requirements - Part 16: "Air Interface for Fixed Broadband Wireless Access Systems," May 2005 and related amendments/versions. For more information with respect to UTRAN LTE standards, see the 3rd Generation Partnership Project (3GPP) standards for UTRAN-LTE, release 8, March 2008, including variations and evolutions thereof.

In some embodiments, the base station 102 and the UEs 104, such as M2M devices, can utilize one or more antennas for transmission of RF signals between the UEs 104 and between the UEs 104 and the network. In certain embodiments, the antennas can comprise one or more directional or omnidirectional antennas, including, for example, dipole antennas, monopole antennas, patch antennas, loop antennas, microstrip antennas or other types of antennas suitable for transmission of RF signals. In various embodiments, instead of two or more antennas, a single antenna with multiple apertures can be used. In these embodiments, each aperture can be considered a separate antenna. In some multiple-input multiple-output (MIMO) embodiments, antennas can be effectively separated to take advantage of spatial diversity and the different channel characteristics that can result between each of antennas and the antennas of a transmitting station. In some embodiments, a UE 104, such as an M2M device, can utilize a single antenna.

In various embodiments, the eNB or network resources associated with the eNB can monitor the network traffic and can modify parameters of the eNB or the UEs to utilize the network resources such that disruptions to network access is minimized and that high priority communication over the network is maintained. In various embodiments, the eNB or other resource can detect an overload condition of the network, or the probable future overload of the network. In such embodiments, the eNB or other network resources, such as the core network equipment, can provide commands, messages or changes to system parameters, communicated over the network, that bar one or more UEs from accessing the wireless network system.

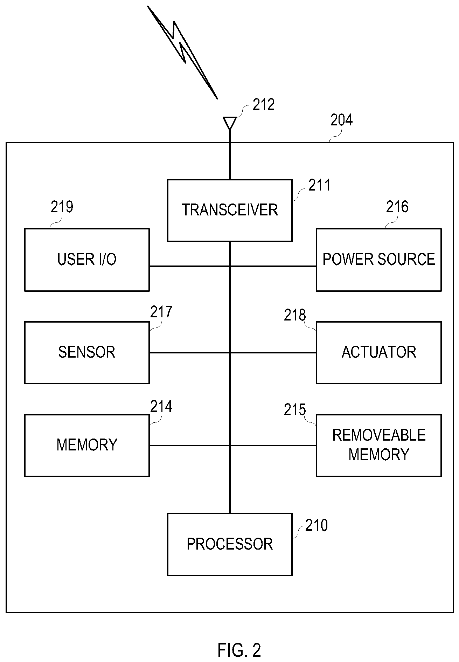

FIG. 2 illustrates generally an example of a UE 204 including a processor 210, transceiver 211, and an antenna 213. In some embodiments, the UE 204 can include memory 214 to store processing information and parameters. In certain embodiments, the UE can accommodate removable memory 215 such as a system identification module (SIM), for example. In certain embodiments, the UE can include a power source 216 to allow mobile or remote operation. In some embodiments, the UE can include inputs and outputs. In certain embodiments, the UE inputs can include a sensor 217, such as, but not limited to, a temperature sensor, a module for detecting GPS position, a medical sensor, a condition detector such as a voltage, current, liquid or gas flow detector, a liquid or product level sensor, a light sensor, a infrared (IR) sensor, a clock, a switch, or a counter. In certain embodiments, the UE outputs can include, but are not limited to, a light, a vibration device, a voltage output, an electrode, or an actuator 218, such as a solenoid or motor. In certain examples, the UE can include user inputs and outputs (I/O) 219 such as, but not limited to, a keyboard, a display, a microphone or a speaker. In some embodiments, such as simple M2M devices, the processor 210 can include circuitry to perform the functions of the device in contrast to a microprocessor based processor.

Access Class Barring (ACB) is a known operation in mobile networks, whereby devices of certain classes can be barred from using defined resources so that other devices can be provided priority. At present, access class barring is geared towards distinguishing access control between a mobile assigned an access class for "normal" uniform access control treatment (0-9) and higher priority classes. These classes were defined when essentially all devices were used by human operators, and did not anticipate the rise of machine-to-machine (M2M) operation. Accordingly, the current specifications related to ACB mechanism lack mechanism to differentiate between M2M devices and human operated devices. As such, there is a lack of procedures that can be directed to sending messages and instructions exclusively to M2M devices.

In addition, responsive speed of current ACB mechanisms can often be to slow to mitigate network congestion because such mechanisms utilize system information messages that are subject to modification procedures that can be relatively extensive compared to the rate of increasing network congestion at the time of detection. For example, a current approach for ACB includes changing parameters associated with system information block 2 (SIB2) or a system information block of type 2. In certain protocols, two modification periods can be required to change the access behavior of UE upon receiving a system information message indicating a change in an ACB parameter. Such modification periods can include a system information block (SIB) modification period and an SIB updated information period. The total time to implement the change in the ACB parameter can be lengthy, for example a modification period can extend as long as about 41 seconds in some situations.

As more devices, both human operated and M2M, are added to mobile device networks, the likelihood of congestion on the radio access channels increases. Many M2M devices are used for automated reporting of values to a centralized system. The spectrum of M2M devices is extremely wide and varied. Such devices can include, but not are not limited to, smart meters for the electrical grid and other utilities, smart sensors, medical devices for mobile health and telemedicine, for example, remote monitoring and control devices for vending machines, vehicles, signage, and asset tracking. Though timely access to the wireless network is desired for M2M communications, M2M communications of some UEs can be delayed access to a congested network without compromising the function associated with the delayed M2M communications. Meanwhile, users of network devices, such as voice users, can be inconvenienced by congested networks that can disconnect or refuse access temporarily while M2M device communications are allowed to contribute to the congestion even though the M2M communications are not time critical. Without the ability to treat M2M devices differently than user operated devices, as loads on a network increase, an M2M device that does not depend on timely access to the network can be treated the same as a user operated device. By providing a mechanism to differentiate M2M devices from other network devices, the occurrence of large scale network congestion can be mitigated.

In various networks, M2M UEs can cause bursty access. For example, M2M UEs can include devices that have scheduled update periods. Because of simplicity in programming such UEs, those update periods can be programmed to occur at the same interval or at intervals that have overlapping update times with other UEs, such as at the top of an hour. When a surge of M2M devices suddenly access the network for a short period, for example between 10 and 60 seconds, the modification periods of the current solutions, as discussed above, may not be helpful in alleviating the network congestion. In addition, although some eNBs can still have additional methods for overload handling, such as radio resource control (RRC) rejection, such methods may not fulfill the network overload protection purpose because the random access channel (RACH) can be overloaded thus blocking access of other UEs for a substantial period of time. In addition, RRC rejection may not fulfill the network overload protection purpose because RRC signaling messages can use a large number of radio resources thus impacting quality of service of ongoing connections of other connected UEs.

The present subject matter provides apparatus and methods of enhanced access barring EAB that can be implemented in UEs in a more timely and efficient manner to make access barring more effective. In an example, a paging message can include a notification indicating a change in EAB parameters. Upon detecting the notification, the UE can obtain updated EAB parameters and apply the appropriate access control without waiting for an SIB modification period. In an example, the UE can include one or more settings identifying the UE as a member of one or more categories of device. In an example, the one or more settings identifying the UE as a member of one or more categories of device can be saved in a subscriber interface module (SIM) of the UE. In certain examples, the one or more categories associated with EAB are different than the one or more classes associated with ACB.

In an example, a UE having machine type communications (MTC) capability can be a member of one of several categories of M2M devices that can include lower priority MTC communications. In an example, lower priority MTC communications can include scheduled communications to transmit routine status or control information. In an example, such as for certain medical device UEs, a device can be a member of a category indicating a need for higher priority MTC communications. In certain examples, high priority MTC communications can include communications to report or control warning conditions or conditions that can indicate a threat to the health of equipment or personnel.

In certain examples, a paging message from a cell base station can mitigate congestion on a mobile device network because the message can be received and processed before or as the network congestion begins to increase. In an example, the page message can include the EAB information. In an example, the paging message can include a notification of a change in the EAB information. In response to receiving the page message, the UE can access previously stored EAB information or can receive additional messages, such as a system information message, with the EAB information. In certain examples, previously stored EAB information can include default EAB information stored well before the UE received the EAB notification. In some examples, the previously stored EAB information can include EAB information that was transmitted just prior to or simultaneously with the EAB notification. In an example, upon receiving a page message including a notification of a change in EAB information, the UE can subsequently receive the EAB information in subsequent message such as a subsequent system information message or a subsequent page message. In certain examples, a UE can apply barring policy established by the EAB information received with or in response to an EAB notification until a subsequent page message, including a new EAB notification, is received. In an example, a UE can apply barring policy established by the EAB information received with or in response to an EAB notification until a predetermined interval of time expires. In an example, the predetermined interval of time can be determined using the received EAB information. In an example, a UE can apply barring policy established using the EAB information until new EAB information is received at the UE.

In certain examples, a UE can access a system information block including the EAB information each time the UE attempts to accesses the mobile wireless network. In an example, a system information block including the EAB information can be accessed without substantial delay. In an example, a system information block including the EAB information can be accessed and the EAB policy established by the EAB information can be implemented in the UE within a predetermined period of time. In certain examples, the predetermined period of time to access the system information block including the EAB information and to apply the EAB policy at the UE can be less than about 1 second. In an example, the system information block including the EAB information is different than a system information block including the ACB information. In an example, a device of the UE, such as one or more processors, can request access to the mobile device network. As part of the process of accessing the mobile wireless network, the one or more UE processors can access the system information block including the EAB information to determine whether the UE is a device in a category of devices barred from accessing the wireless mobile network. If the UE is of a category of devices barred from accessing the mobile device network, the one or more processors can deny the request to access the mobile device network. If the UE is not of a category of devices that are barred from accessing the mobile device network, than the one or more processors can grant the request to allow the UE to access the mobile device network.

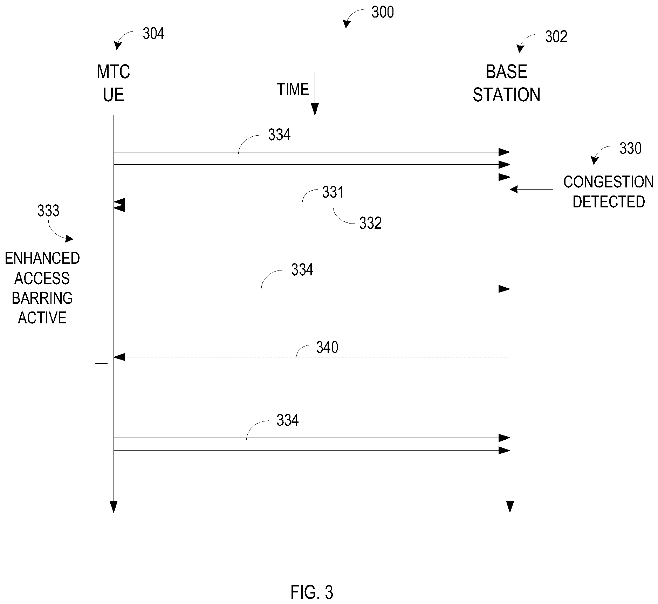

FIG. 3 illustrates generally a message flow diagram 300 between a base station 302 and one or more MTC UEs 304 of an example mobile wireless system. In certain examples, upon detection of network congestion 330, or a threshold probability of network congestion, network resources, such as but not limited to, core network equipment, and radio access technology equipment such as a mobile management entity (MME), radio network controller (RNC), radio resource control (RRC), or radio resource management (RRM), can provide command information to implement EAB. In certain examples, the network resources can determine one or more categories of UE equipment to bar access to the mobile device network. In certain examples, command information can be received from network resources at one or more base stations 302, such as one or more eNBs or HeNBs. In certain examples, upon receiving the command information, a base station 302 can wirelessly transmit a message 331, such as a page message, providing the EAB information using the mobile device network. In some examples, upon receiving the command information, the base station 302 can wirelessly transmit a message 331, such as a page message, providing an EAB notification using the mobile device network. In such an example, the base station can wirelessly transmit another message 332 including the EAB information. The subsequent message 332 can include, but is not limited to, a page message or a system information message. In certain examples, a UE 304 can apply barring policy established by the EAB information received with or in response to an EAB notification until a second subsequent message 340, including a new EAB notification, is received. In an example, a UE 304 can apply barring policy established by the EAB information received with or in response to an EAB notification until a predetermined interval of time expires. In an example, the predetermined interval of time can be determined using the received EAB information.

In an example, a device of a UE 304, such as one or more processors, can request access to the mobile device network. As part of the process of accessing the mobile wireless network, the one or more UE processors can access the system information block or other parameter including the EAB information to determine whether the UE is a device in a category of devices barred from accessing the wireless mobile network. If the UE is of a category of devices barred from accessing the mobile device network, the one or more processors can deny the request to access the mobile device network while the enhanced access barring of the UE is active 333. If the UE is not of a category of devices that are barred from accessing the mobile device network, than the one or more processors can grant the request to allow the UE to access the mobile device network 334.

It is understood that the subsequent message 332 can be optional if the initial message 331 includes the EAB information. It is also understood that the second subsequent message can be optional if the expiration of the EAB information is predetermined.

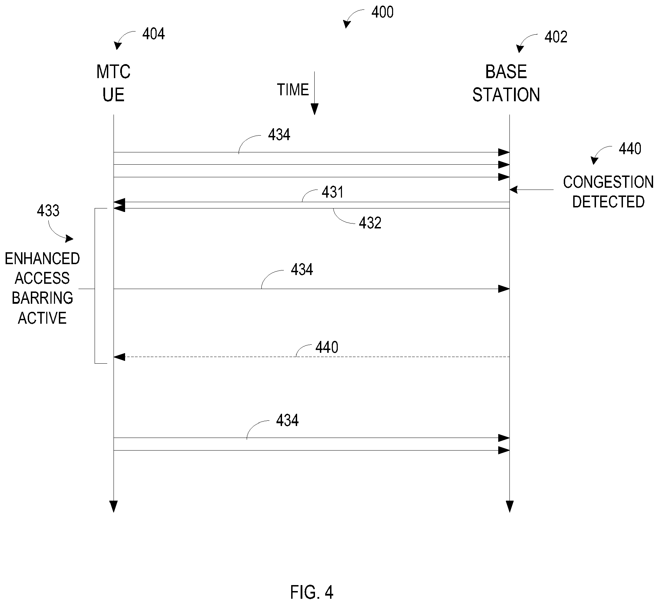

FIG. 4 illustrates generally a message flow diagram 400 between a base station 402 and one or more MTC UEs 404 of an example mobile wireless system. In certain examples, upon detection of network congestion 430, or a threshold probability of network congestion, network resources, such as but not limited to, core network equipment, and radio access technology equipment such as a mobile management entity (MME), radio network controller (RNC), radio resource control (RRC), or radio resource management (RRM), can provide command information to implement EAB. In certain examples, the network resources can determine one or more categories of UE equipment to bar access to the mobile device network. In certain examples, command information can be received from the network resources at one or more base stations 402, such as one or more eNBs or HeNBs. In certain examples, upon receiving the command information, the base station 402 can wirelessly transmit a message 431, such as a system information message, providing the EAB information using the mobile device network. In an example, the EAB information can be included in a system information block. In an example, the system information block can be different than a system information block including ACB information. In certain examples, a UE 304 can apply barring policy established by the EAB information received with the system information message 431 until a subsequent system message 340 including a new EAB notification, is received. In an example, a UE can apply barring policy established by the EAB information received with the system information message 331 until a predetermined interval of time expires. In an example, the predetermined interval of time can be determined using the received EAB information.

In an example, a device of a UE 404, such as one or more processors, can request access to the mobile device network. As part of the process of accessing the mobile wireless network, the one or more UE processors can access the system information block or other parameter including the EAB information to determine whether the UE is a device in a category of devices barred from accessing the wireless mobile network. If the UE is of a category of devices barred from accessing the mobile device network, the one or more processors can deny the request to access the mobile device network while the enhanced access barring of the UE is active 433. If the UE is not of a category of devices that are barred from accessing the mobile device network, than the one or more processors can grant the request to allow the UE to access the mobile device network 434.

It is understood that the second subsequent message 440 can be optional if the expiration of the EAB information is predetermined.

### EXAMPLES AND ADDITIONAL NOTES

In Example 1, a method for controlling access in a mobile device network can include receiving access class barring (ACB) information at user equipment (UE) as part of a system information message including a first system information block, receiving enhanced access barring (EAB) information at the UE as part of a system information message including a second system information block, and wherein the first system information block is different from the second system information block.

In Example 2, the method of claim 1 optionally includes generating a request, at the UE, to access the mobile device network, and processing the request to access the mobile device network using a processor of the UE and the EAB information.

In Example 3, the processing the request of any one or more of Examples 1 and 2 optionally includes denying the request to access the mobile device network when the EAB information indicates the UE is of a category of of machine-to-machine (M2M) devices barred from accessing the mobile wireless network.

In Example 4, the processing the request of any one pr more of Examples 1-3 optionally includes accessing the mobile device network in response to the request when the EAB information indicates the UE is not of a category of UEs barred from accessing the mobile wireless network.

In Example 5, the receiving enhanced access barring (EAB) information of any one or more of Examples 1-4 optionally includes receiving a paging message from a base station of the mobile wireless network.

In Example 6, the base station of any one or more of Examples 1-5 optionally includes an enhanced node B (eNB) base station of a long term evolution (LTE) mobile wireless network.

In Example 7, the receiving enhanced access barring (EAB) information of any one or more of Examples 1-6, optionally includes receiving a paging message from a radio network controller (RNC) of a UMTS network.

In Example 8, the processing the request of any one or more of Examples 1-7 optionally includes accessing the second system information block.

In Example 9, a method for operating an enhanced base station, the method can include transmitting system information of a first block type including access class barring (ACB) information, receiving an indication of an overload condition in a mobile device network, and transmitting system information of a second block type including enhanced access barring (EAB) information, wherein the EAB information is to reduce the overload condition using one or more categories of UEs.

In Example 10, the transmitting system information of a second block type of any one or more of Examples 1-9 optionally includes transmitting a page message.

In Example 11, the transmitting a page message of any one or more of Examples 1-10 optionally includes transmitting page message including a notification indicative of a change in the EAB information.

In Example 12, the transmitting the system information of the second block type of any one or more of Examples 1-11 optionally includes transmitting EAB information indicating one or more categories of UEs barred from accessing the mobile device network.

In Example 13, a mobile device for wirelessly communicating within a wireless access network can include a wireless transceiver to receive a system information message of a first block type including access barring information from a base station, to receive a system information message of a second block type including access class bar (ACB) information from the base station, wherein the first block type is different from the second block type, and to transmit output information using the mobile device network, and a processor to receive first system information of the system information message of the first block type, to receive second system information of the system information of the second block type and to provide the output information to the wireless transceiver.

In Example 14, the processor of any one or more of Examples 1-13 is optionally arranged to receive a request to access the mobile device network.

In Example 15, the processor of any one or moreof Examples 1-14 is optionally arranged to deny the request to access the mobile device network when the EAB information indicates the mobile device is of a category of devices barred from accessing the mobile wireless network.

In Example 16, the processor of any one or more of Examples 1-15 is optionally arranged to accesses the mobile device network using the wireless transceiver in response to the request to access the mobile wireless network when the EAB information indicates the mobile device is not of a category of devices barred from accessing the mobile wireless network.

In Example 17, the processor and the wireless transceiver of any one or more of Examples 1-16 are optionally arranged to provide wireless, machine type communication (MTC) capabilities using the mobile device network.

In Example 18, the wireless transceiver and the processor of any one or more of Examples 1-17 are to receive and to process the system information messages of the first block type and the second block type from an enhanced node B (eNB) of a long term evolution (LTE) mobile wireless network.

In Example 19, the wireless transceiver and the processor of any one or more of Examples 1-18 optionally are to receive and to process a paging message indicating a change in the EAB information.

In Example 20, the mobile device of any one or more of Examples 1-19 optionally includes memory, and wherein the processor of any one or more of Examples 1-19 is optionally arranged to store the received EAB information in the memory.

In Example 21, the processor of any one or more of Examples 1-20 is optionally arranged to access the stored EAB information in response to a request of the mobile device to access the mobile device network.

In Example 22, the processor of any one or more of Examples 1-21 is optionally arranged to access the stored EAB information in response to each request of the mobile device to access the mobile device network.

In Example 23, a machine-to-machine (M2M) device can include a transceiver to receive access class barring (ACB) information as part of a first message and to receive enhanced access barring (EAB) information as part of a second message, and circuitry to deny a request to access a mobile device network when the EAB information indicates the device is of a category of devices barred from accessing the mobile wireless network and to access the mobile device network, using the transceiver, in response to the request to access a mobile device network when the EAB information indicates the device is not of a category of devices barred from accessing the mobile wireless network.

In Example 24, the second message of any one or more of Example 1-23 optionally includes a page message.

In Example 25, the second message of any one or more of Examples 1-24 optionally includes a page message including an indication of changed EAB information in a system information block.

In Example 26, the system information block of any one or more of Examples 1-25 optionally is different from a second system information block including at least a portion of the ACB information.

In Example 27, the circuitry of any one or more of Examples 1-26 optionally is arranged to read the EAB information of the system information block in response to each request to access the mobile device network.

In Example 28, the mobile device network of any one or more of Examples 1-27 optionally includes at least one of a LTE network or UMTS network.

In Example 29, can include, or can optionally be combined with any portion or combination of any portions of any one or more of Examples 1-20 to include, subject matter that can include means for performing any one or more of the functions of Examples 1-20, or at least one machine-readable medium including a plurality of instructions that in response to being executed on a computing device, cause the computing device to perform any one or more of the functions of Examples 1-28.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non- volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment.

## Claims

1. A method for controlling access in a mobile device network, the method comprising:
receiving access class barring 'ACB' information at user equipment 'UE' (304) as part of a system information message including a first system information block;
receiving enhanced access barring 'EAB' information at the UE as part of a system information message including a second system information block, wherein the first system information block is different from the second system information block;
receiving a paging message (331) from a base station (302) of the mobile wireless network, the paging message including a notification of a change in the EAB information; and
in response to receiving the paging message, accessing previously stored EAB information at the UE.

2. The method of claim 1, including generating a request, at the UE, to access the mobile device network; and
processing the request to access the mobile device network using a processor of the UE and the EAB information.

3. The method of claim 2, wherein processing the request includes denying the request to access the mobile device network when the EAB information indicates the UE is of a category of machine-to-machine 'M2M' devices barred from accessing the mobile wireless network.

4. The method of claim 2, wherein processing the request includes accessing the mobile device network in response to the request when the EAB information indicates the UE is not of a category of UEs barred from accessing the mobile wireless network.

5. The method of claim 1, wherein the base station includes an enhanced node B 'eNB' base station of a long term evolution 'LTE' mobile wireless network.

6. The method of claim 2, wherein processing the request includes accessing the second system information block.

7. A mobile device (204) for wirelessly communicating within a wireless access network, the mobile device comprising:
a wireless transceiver (211) to receive a system information message of a first block type including enhanced access barring 'EAB' information from a base station, to receive a system information message of a second block type including access class bar 'ACB' information from the base station, wherein the first block type is different from the second block type, and to transmit output information using the mobile device network; and
a processor (210) to receive first system information of the system information message of the first block type, to receive second system information of the system information of the second block type and to provide the output information to the wireless transceiver, wherein:
the wireless transceiver and the processor are arranged to receive a paging message (331) from a base station (302) of the mobile wireless network, the paging message including notification of a change in the EAB information; and
the processor is arranged to, in response to receiving the paging message, access previously stored EAB information.

## Patentansprüche

1. Verfahren zur Zugriffssteuerung in einem Mobilgerätenetzwerk, das Verfahren umfassend:
Empfangen von Informationen über die Zugriffsklassensperrung (Access Class Barring, ACB) an dem Benutzergerät (User Equipment, UE) (304) als Teil einer Systeminformationsnachricht, die einen ersten Systeminformationsblock einschließt;
Empfangen von Informationen über die verbesserte Zugriffssperrung (Enhanced Access Barring, EAB) an dem UE als Teil einer Systeminformationsnachricht, die einen zweiten Systeminformationsblock einschließt, wobei der erste Systeminformationsblock sich von dem zweiten Systeminformationsblock unterscheidet;
Empfangen einer Funkrufnachricht (331) von einer Basisstation (302) des Mobilfunknetzwerks, wobei die Funkrufnachricht eine Benachrichtigung über eine Änderung der EAB-Informationen einschließt; und
in Reaktion auf das Empfangen der Funkrufnachricht, Zugreifen auf zuvor gespeicherte EAB-Informationen an dem UE.

2. Verfahren nach Anspruch 1, welches das Erzeugen einer Anforderung an dem UE einschließt, um auf das Mobilgerätenetzwerk zuzugreifen; und
das Verarbeiten der Anforderung für den Zugriff auf das Mobilgerätenetzwerk unter Verwendung eines Prozessors des UE und der EAB-Informationen.

3. Verfahren nach Anspruch 2, wobei das Verarbeiten der Anforderung das Verweigern der Anforderung für den Zugriff auf das Mobilgerätenetzwerk einschließt, wenn die EAB-Informationen anzeigen, dass das UE einer Kategorie von Maschine-Maschine(M2M)-Vorrichtungen angehört, deren Zugriff auf das Mobilfunknetzwerk gesperrt ist.

4. Verfahren nach Anspruch 2, wobei das Verarbeiten der Anforderung den Zugriff auf das Mobilgerätenetzwerk in Reaktion auf die Anforderung einschließt, wenn die EAB-Informationen anzeigen, dass das UE keiner Kategorie von UEs angehört, deren Zugriff auf das Mobilfunknetzwerk gesperrt ist.

5. Verfahren nach Anspruch 1, wobei die Basisstation eine Basisstation mit erweitertem Knoten B (enhanced Node B, eNB) eines Long Term Evolution(LTE)-Mobilfunknetzwerks einschließt.

6. Verfahren nach Anspruch 2, wobei das Verarbeiten der Anforderung das Zugreifen auf den zweiten Systeminformationsblock einschließt.

7. Mobilgerät (204) zum drahtlosen Kommunizieren innerhalb eines drahtlosen Zugangsnetzwerks, wobei das Mobilgerät umfasst:
einen drahtlosen Transceiver (211) zum Empfangen einer Systeminformationsnachricht eines ersten Blocktyps, die Informationen über die verbesserte Zugriffssperrung (Enhanced Access Barring, EAB) von einer Basisstation einschließt, zum Empfangen einer Systeminformationsnachricht eines zweiten Blocktyps, die Informationen über die Zugriffsklassensperrung (Access Class Barring, ACB) von der Basisstation einschließt, wobei der erste Blocktyp sich von dem zweiten Blocktyp unterscheidet, und zum Übertragen der Ausgabeinformationen unter Verwendung des Mobilgerätenetzwerks; und
einen Prozessor (210) zum Empfangen der ersten Systeminformation der Systeminformationsnachricht des ersten Blocktyps, zum Empfangen der zweiten Systeminformation der Systeminformationen des zweiten Blocktyps und zum Bereitstellen der Ausgabeinformationen an den drahtlosen Transceiver, wobei:
der drahtlose Transceiver und der Prozessor angeordnet sind, um eine Funkrufnachricht (331) von einer Basisstation (302) des Mobilfunknetzwerks zu empfangen, wobei die Funkrufnachricht eine Benachrichtigung über eine Änderung der EAB-Informationen einschließt; und
der Prozessor angeordnet ist, um in Reaktion auf das Empfangen der Funkrufnachricht auf die zuvor gespeicherten EAB-Informationen zuzugreifen.

## Revendications

1. Procédé pour contrôler un accès dans un réseau de dispositif mobile, le procédé consistant à :
recevoir des informations d'interdiction de classe d'accès (ACB) au niveau d'un équipement utilisateur (UE) (304) sous la forme d'une partie d'un message d'informations système comportant un premier bloc d'informations système ;
recevoir des informations d'interdiction d'accès étendue (EAB) au niveau de l'équipement utilisateur sous la forme d'une partie d'un message d'informations système comportant un second bloc d'informations système, dans lequel le premier bloc d'informations système est différent du second bloc d'informations système ;
recevoir un message de radiomessagerie (331) d'une station de base (302) du réseau sans fil mobile, le message de radiomessagerie comportant une notification d'un changement des informations d'interdiction EAB ; et
à la suite de la réception du message de radiomessagerie, avoir accès à des informations d'interdiction EAB stockées auparavant au niveau de l'équipement utilisateur.

2. Procédé selon la revendication 1, consistant à générer une requête, au niveau de l'équipement utilisateur, pour avoir accès au réseau de dispositif mobile ; et
à traiter la requête pour avoir accès au dispositif de réseau mobile à l'aide d'un processeur de l'équipement utilisateur et des informations d'interdiction EAB.

3. Procédé selon la revendication 2, dans lequel le traitement de la requête consiste à refuser la requête pour avoir accès au réseau de dispositif mobile lorsque les informations d'interdiction EAB indiquent que l'équipement utilisateur fait partie d'une catégorie de dispositifs de machine à machine (M2M) interdits d'accès au réseau sans fil mobile.

4. Procédé selon la revendication 2, dans lequel le traitement de la requête consiste à avoir accès au réseau de dispositif mobile lorsque les informations d'interdiction EAB indiquent que l'équipement utilisateur ne fait pas partie d'une catégorie d'équipements utilisateurs interdits d'accès au réseau sans fil mobile.

5. Procédé selon la revendication 1, dans lequel la station de base comprend une station de base de noeud B évolué (eNB) d'un réseau sans fil mobile reposant sur une technologie d'évolution à long terme (LTE).

6. Procédé selon la revendication 2, dans lequel le traitement de la requête consiste à avoir accès au second bloc d'informations système.

7. Dispositif mobile (204) pour communiquer sans fil dans un réseau d'accès sans fil, le dispositif mobile comprenant :
un émetteur-récepteur sans fil (211) pour recevoir un message d'informations système d'un premier type de bloc comportant des informations d'interdiction d'accès étendue (EAB) en provenance d'une station de base, pour recevoir un message d'informations système d'un second type de bloc comportant des informations d'interdiction de classe d'accès (ACB) en provenance de la station de base, dans lequel le premier type de bloc est différent du second type de bloc et pour transmettre des informations de sortie à l'aide du réseau de dispositif mobile ; et
un processeur (210) pour recevoir des premières informations système du message d'informations système du premier type de bloc, pour recevoir des secondes informations système des informations système du second type de bloc et pour fournir les informations de sortie à l'émetteur-récepteur sans fil, dans lequel :
l'émetteur-récepteur sans fil et le processeur sont conçus pour recevoir un message de radiomessagerie (331) en provenance d'une station de base (302) du réseau sans fil mobile, le message de radiomessagerie comportant une notification d'un changement des informations d'interdiction EAB ; et
le processeur est conçu, à la suite de la réception du message de radiomessagerie, pour accéder à des informations d'interdiction EAB stockées auparavant.
